## Europäisches Patentamt
## European Patent Office
## Office européen des brevets

(19)

(11) Numéro de publication: **0 085 595**
**B1**

(12)

# FASCICULE DE BREVET EUROPEEN

(45) Date de publication du fascicule du brevet: 02.04.86

(51) Int. Cl.⁴: **H 02 H 3/33**, H 01 H 71/32

(21) Numéro de dépôt: 83400105.9

(22) Date de dépôt: 17.01.83

(54) Dispositif de déclenchement différentiel à propre courant.

(30) Priorité: 19.01.82 FR 8200866

(43) Date de publication de la demande: 10.08.83 Bulletin 83/32

(45) Mention de la délivrance du brevet: 02.04.86 Bulletin 86/14

(84) Etats contractants désignés: AT BE CH DE GB IT LI NL SE

(56) Documents cités:
EP - A - 0 039 280
FR - A - 2 246 097
GB - A - 136 981

(73) Titulaire: MERLIN GERIN, Rue Henri Tarze, F-38050 Grenoble Cedex (FR)

(72) Inventeur: Bonniau, Michel, 12, rue du Creux au Fer, F-71100 Lux (FR)
Inventeur: Roulet-Dubonnet, Jean-Pierre, Merlin Gerin Rue Henri Tarze, F-38050 Grenoble cedex (FR)

(74) Mandataire: Kern, Paul et al, Merlin Gerin Sce. Brevets 20, rue Henri Tarze, F-38050 Grenoble Cedex (FR)

## Description

L'invention est relative à un dispositif de déclenchement différentiel selon le préambule de la revendication 1.

Un dispositif différentiel du genre mentionné, qui ne nécessite aucune source auxiliaire d'alimentation, est particulièrement adapté à la protection différentielle d'une installation basse tension domestique ou artisanale qui doit être simple et économique. Le dispositif est avantageusement incorporé ou associé à un interrupteur ou à un disjoncteur à boîtier moulé, par exemple du type miniature. Il assure la protection des personnes contre les contacts indirects et fréquemment une protection complémentaire contre les contacts directs, en particulier lorsque sa sensibilité est supérieure à environ 30 milliampères. L'obligation de réagir à de très faibles courants de défaut et d'autre part de disposer d'une énergie mécanique suffisante à la commande du verrou du disjoncteur ont contraint les constructeurs à développer des dispositifs d'accumulation d'énergie, notamment à condensateurs, à circuits résonnants, à relais polarisés et analogues, qui sont parfaitement efficaces en présence d'un courant de défaut alternatif. Or, ces dernières années on incorpore de plus en plus fréquemment des dispositifs électroniques à effet redresseur du courant dans de nombreux appareils d'utilisation, notamment pour le réglage de la vitesse des moteurs, et ces dispositifs redresseurs peuvent engendrer une composante continue susceptible d'influencer le fonctionnement du dispositif différentiel ou même de le rendre inopérant.

Le document EP-A-0 039 280 décrit un dispositif de protection différentielle ayant sensiblement le même seuil de déclenchement pour un défaut à courant alternatif et un défaut à courant redressé ou haché. Le signal de défaut émis par le transformateur différentiel est traité par un filtre passif passe-bas pour former un signal alternatif symétrique de faible déformation qui est vu et traité par le relais comme tout autre signal de défaut alternatif. Ce dispositif est incapable de réagir à un défaut à courant continu.

Le besoin s'est fait sentir de développer un disjoncteur différentiel à propre courant et à haute sensibilité capable d'assurer une protection efficace des personnes dans tous les cas de figure. A cet effet, il est apparu nécessaire que les dispositifs différentiels soient sensibles aux courants alternatifs, aux courants pulsés et aux courants continus appliqués brutalement. Le seuil de sensibilité dans le cas du courant continu appliqué brutalement peut être supérieur à celui d'un courant de défaut alternatif, mais la temporisation au déclenchement doit être notablement inférieure. La contrainte d'un déclenchement quasi instantané élimine toutes les solutions d'accumulation d'énergie dans un condensateur qui retardent toujours le déclenchement. Sont également éliminées toutes les solutions réagissant à une seule alternance ou à une seule polarité du courant de défaut et aucun des dispositifs connus ne réalise le but précité de la présente invention, d'une protection efficace pour tout défaut, qui est réalisé par les caractéristiques de la revendication 1.

L'enroulement secondaire du transformateur différentiel alimente directement, par l'intermédiaire du redresseur à double alternance, le relais de déclenchement du type polarisé. Le déclenchement intervient dès le franchissement du seuil prédéterminé et indépendamment de la polarité du signal de défaut. Le relais possède une très faible puissance de déclenchement, par exemple de l'ordre de 200 μ VA, et une constante de temps supérieure à 15 ms, par exemple voisine de 30 ms. La self importante du relais permet un stockage d'énergie de déclenchement dans le fer.

Le document FR-A-2 246 097 décrit un disjoncteur différentiel réagissant à tous les types de défaut différentiel mais il fait usage de deux ou trois transformateurs différentiels et de circuits de traitement associés, chacun adapté à sa propre fonction.

Pour accroître la puissance du signal délivré par le transformateur différentiel, il est avantageux de réaliser le circuit magnétique de ce transformateur en un matériau présentant une forte différence entre les inductions de saturation et de rémanence. La puissance disponible au niveau du relais peut également être augmentée par l'adjonction d'un condensateur modifiant le déphasage entre le courant et la tension aux bornes de l'enroulement secondaire du transformateur différentiel et en combinant ces deux dispositions il a été possible de respecter l'encombrement des disjoncteurs miniatures, notamment la hauteur de 68 mm, en répondant aux conditions précitées de sensibilité, notamment à une composante continue.

D'autres avantages et caractéristiques ressortiront plus clairement de la description qui va suivre de différents modes de mise en oeuvre de l'invention, donnés à titre d'exemples non limitatifs et représentés dans le dessin annexé, dans lequel:

la figure 1 représente le schéma d'un dispositif de déclenchement selon l'invention;

la figure 2 est une vue analogue à celle de la fig. 1, représentant une variante de réalisation;

les figures 3 et 4, analogues aux figures 1 et 2, illustrent des perfectionnements.

Sur les figures, un transformateur différentiel 10 à circuit magnétique 12 en forme de tore porte deux enroulements primaires 14, 16 et un enroulement ou bobinage secondaire 18. Le transformateur 10 est incorporé ou associé à un disjoncteur électrique (non représenté) de coupure des conducteurs de phase et de neutre connectés aux enroulements 14, 16. Le déclenchement du disjoncteur est piloté par un relais 20, dont la palette 22 actionne la serrure du disjoncteur. La palette 22 coopère avec une culasse fixe 24 en forme de U dont l'une des branches porte un bobinage 26. Un aimant permanent 28, intercalé entre les branches du U, maintient la palette 22 en position accolée à l'encontre d'une force de rappel 30. De tels relais polarisés 20 sont bien connus et présentent l'avantage d'une faible puissance de déclenchement.

L'une des extrémités du bobinage 26 du relais 20 est reliée à un point milieu 32 de l'enroulement secondaire 18, tandis que l'autre extrémité est reliée par l'intermédiaire de deux diodes $D_1$, $D_2$ aux deux extrémités de l'enroulement secondaire 18. Le redresseur 19 à double alternance, constitué par les diodes $D_1$, $D_2$ transforme le courant alternatif engendré dans l'enroulement secondaire 18, lors de l'apparition d'un courant différentiel dans les enroulements primaires 14, 16, en courant continu d'alimentation du relais 20, de polarité appropriée.

Selon la présente invention la constante de temps du relais 20, en l'occurrence le rapport entre son inductance Z et sa résistance R, est élevée, en particulier $\frac{L}{R} > 15$ ms. Le bobinage 26 peut par exemple comporter 8000 spires d'un fil d'un diamètre de 0,44 mm, $\frac{L}{R}$ étant dans ce cas voisin de 30 ms. Ce rapport élevé, allié à l'alimentation du relais en courant continu, permet une accumulation d'énergie dans le fer suffisante au déclenchement. Le très grand nombre de spires du bobinage 26 réduit l'intensité du courant traversant les diodes $D_1$, $D_2$ et en conséquence les pertes dans ces diodes.

Selon un développement de l'invention le circuit magnétique 12 du transformateur différentiel 10 est réalisé en un matériau à induction de saturation élevée et à induction rémanente faible. En présence d'un défaut différentiel à composante continue, la courbe d'hystérésis du matériau du circuit est parcourue entre ces deux valeurs extrêmes en engendrant un signal d'une amplitude notable dans l'enroulement secondaire 18 d'une manière bien connue des spécialistes.

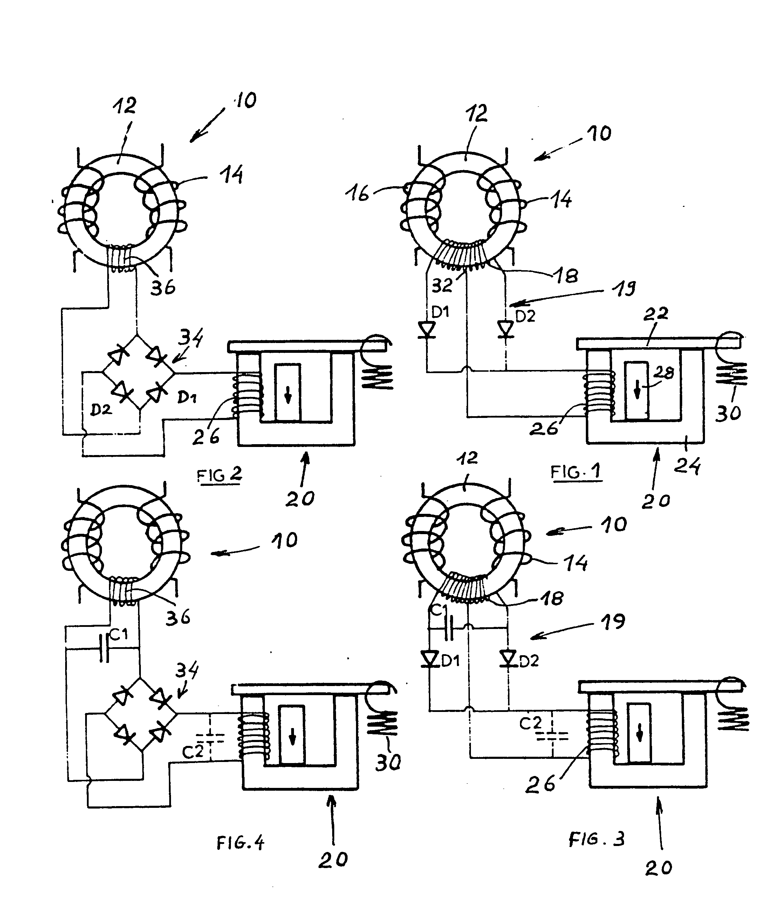

Le dispositif selon la fig. 1 fonctionne de la manière suivante:

En fonctionnement normal d'égalité des courants dans les enroulements primaires 14, 16 aucune tension n'est induite dans le secondaire 18 et le relais 20 est maintenu en position collé. Lors d'un déséquilibre entre les courants, en l'occurrence lors d'un défaut différentiel entre des courants alternatifs, un signal de défaut en forme de courant alternatif est engendré dans l'enroulement secondaire 18 et ce signal est appliqué, après redressement à double alternance par les diodes $D_1$, $D_2$, au bobinage 26 du relais 20. L'effet d'accumulation dans le fer du relais 20, grâce à l'inductance élevée du bobinage 26, permet d'atteindre le seuil de déclenchement. La chute de tension dans les diodes $D_1$, $D_2$ est maintenue faible car la valeur du courant dans le circuit est faible et une seule des diodes est, à un instant donné, branchée dans le circuit. Le relais 20 déclenche à l'une quelconque des alternances du signal sans temporisation.

Si les courants dans les enroulements primaires 14, 16 sont des courants continus pulsés ou des courants alternatifs présentant une composante continue qui sont comparables aux courants continus pulsés, un signal alternatif est induit dans l'enroulement secondaire 18. L'amplitude de ce signal est fonction de l'amplitude d'induction, qui est la différence entre l'induction de saturation et l'induction rémanente, et grâce au choix du matériau magnétique ce signal est suffisamment puissant pour actionner le relais 20 de la manière décrite ci-dessus. Le déclenchement intervient sans retard.

Lors d'une application brusque d'un courant continu, par exemple lors d'un défaut à la terre en aval d'un élément redresseur, l'un des enroulements primaires 14, 16 est parcouru par un courant continu, le courant dans l'autre enroulement étant nul. La variation brusque du courant induit un signal temporaire dans l'enroulement secondaire 18, qui alimente le relais 20. Il est à noter que le relais 20 déclenche quelle que soit la polarité du signal transmis soit par la diode $D_1$, soit par la diode $D_2$ et le déclenchement est instantané. L'amplitude d'induction importante du tore garantit un niveau suffisant du signal. La faible chute de tension dans les diodes et l'accumulation d'énergie dans le fer du relais 20 sont également favorables.

Sur les figures 2 à 4, les mêmes numéros de repère sont utilisés pour désigner les éléments analogues ou identiques à ceux de la figure 1. Le dispositif selon la figure 2 comporte un redresseur à double alternance constitué par un pont de diodes 34, relié aux bornes d'un enroulement secondaire 36. Cet enroulement 36 ne comporte plus de point milieu de raccordement, mais l'emploi d'un pont de diodes implique une connexion en série de deux diodes dans le circuit d'alimentation du relais 20, ce qui augmente les chutes de tension. Le fonctionnement est bien entendu identique à celui décrit ci-dessus, le relais 20 réagissant à l'une quelconque de l'alternance du signal de défaut.

Sur la figure 3 un condensateur $C_1$ est relié aux extrémités de l'enroulement secondaire 18, et la valeur de cette capacité, qui modifie le déphasage entre le courant et la tension au secondaire, est choisie pour élever au maximum la tension par spire. On augmente ainsi la puissance disponible à l'alimentation du relais 20. A titre d'exemple cette capacité peut être d'environ 100 nanofarad.

Un deuxième condensateur $C_2$, représenté en trait discontinu, peut être branché aux bornes du bobinage 26 pour améliorer le lissage de la tension redressée, mais ce condensateur $C_2$ temporise le déclenchement et le choix de sa valeur doit résulter d'un compromis entre le retard au déclenchement et une puissance accrue.

La figure 4 représente le dispositif selon la figure 2, doté des condensateurs précités $C_1$ et $C_2$.

Il est facile de voir que le dispositif de déclenchement différentiel selon l'invention est particulièrement simple et ne nécessite aucune source auxiliaire. En utilisant un relais d'une sensibilité d'environ 200 µ vA le dispositif a pu être logé dans l'encombrement de 68 mm d'un boîtier de disjoncteur miniature. Le dispositif assure une protection des personnes quel que soit le courant de défaut.

**Revendications**

1. Dispositif de déclenchement différentiel dans lequel l'énergie de déclenchement fournie à un relais de déclenchement (20) du type polarisé est engendrée dans le bobinage secondaire (18; 36) d'un transformateur différentiel (10) par un défaut différentiel apparaissant dans les enroulements primaires (14, 16) du transformateur différentiel (10), le bobinage (26) du relais polarisé (20) étant relié audit bobinage secondaire (18; 36) par un redresseur à double alternance (19; 34) à diodes (D1, D2), caractérisé en ce que ledit bobinage (26) du relais polarisé présente une inductance et une constante de temps permettant, lors d'un courant pulsé de défaut une accumulation successive d'énergie à chaque impulsion pour une commande de déclenchement pour un seuil prédéterminé et une commande de déclenchement quasi-instantanée, lors d'une apparition brusque d'un défaut continu d'une valeur supérieure audit seuil.

2. Dispositif différentiel selon la revendication 1, caractérisé en ce que l'inductance du relais (20) est voisine de 80 Henry pour un courant alternatif de 50 Hertz et sa résistance voisine de 3 kiloohm.

3. Dispositif différentiel selon la revendication 1 ou 2, caractérisé en ce que le bobinage (26) du relais comporte 8 000 spires.

4. Dispositif différentiel selon la revendication 1, 2 ou 3, caractérisé en ce que la constante de temps est supérieure à 15 millisecondes.

5. Dispositif différentiel selon l'une quelconque des revendications précédentes, caractérisé en ce que le bobinage secondaire (18) présente un point milieu relié à l'une des bornes du bobinage (26) du relais (20), les extrémités du bobinage secondaire (18) étant respectivement reliées par l'intermédiaire d'une diode (D1, D2) à l'autre borne du bobinage (26) du relais (20) pour limiter le nombre de diodes (D1, D2) insérées dans le circuit de déclenchement et les chutes de tension correspondantes.

6. Dispositif différentiel selon l'une quelconque des revendications précédentes, caractérisé en ce que le circuit magnétique (12) du transformateur différentiel (10) est en un matériau dont le cycle d'hystérésis présente une grande différence entre les valeurs d'induction de saturation et de rémanenece.

## Patentansprüche

1. Differential-Auslösevorrichtung, in welcher die Auslöse-Energie für ein Auslöserelais (20) vom polarisierten Typ in der Sekundärwicklung (18; 36) eines Differential-Transformators (10) erzeugt wird, durch einen Differentialfehler, der in den Primärwicklungen (14, 16) des Differential-Transformators (10) auftritt, wobei die Wicklung (26) des polarisierten Relais (20) mit der genannten Sekundärwicklung (18; 36) mittels eines Gleichrichters mit doppelter Alternanz (19; 34) und Dioden (D1, D2) verbunden ist, dadurch gekennzeichnet, dass die genannte Wicklung (26) des polarisierten Relais eine Induktanz aufweist und eine Zeitkonstante, die bei einem pulsierenden Fehlerstrom eine aufeinanderfolgende Speicherung der Energie bei jedem Impuls ermöglicht für einen Auslösebefehl bei Erreichen einer vorbestimmten Schwelle und für einen unmittelbaren Auslösebefehl beim plötzlichen Auftreten eines andauernden Fehlers der über dem Wert der genannten Schwelle liegt.

2. Differentialvorrichtung gemäss Anspruch 1, dadurch gekennzeichnet, dass die Induktanz des Relais ungefähr 80 Henry beträgt für einen Wechselstrom von 50 Hertz und sein Widerstand ungefähr 3 Kiloohm beträgt.

3. Differentialvorrichtung gemäss Anspruch 1 oder 2, dadurch gekennzeichnet, dass die Wicklung (26) des Relais 8000 Windungen besitzt.

4. Differentialvorrichtung gemäss Anspruch 1, 2 oder 3, dadurch gekennzeichnet, dass die Zeitkonstante höher als 15 Millisekunden ist.

5. Differentialvorrichtung gemäss irgendeinem der vorhergehenden Ansprüche, dadurch gekennzeichnet, dass die Sekundärwicklung (18) einen mittleren Punkt aufweist, der mit einer der Klemmen der Wicklung (26) des Relais (20) verbunden ist, wobei die Enden der Sekundärwicklung (18) jeweils mittels einer Diode (D1, D2) mit der anderen Klemme der Wicklung (26) des Relais (20) verbunden sind, um die Anzahl der in dem Auslösekreis geschalteten Dioden (D1, D2) sowie die entsprechenden Spannungsabfälle zu begrenzen.

6. Differentialvorrichtung gemäss irgendeinem der vorhergehenden Ansprüche, dadurch gekennzeichnet, dass der Magnetkreis (12) des Differential-Transformators (10) aus einem Material besteht, dessen Hysteresisschleife einen grossen Unterschied zwischen den Sättigungs- und Remanenz-Induktionswerten aufweist.

## Claims

1. A differential tripping device in which the tripping energy, supplied to a polarized tripping relay (20) is generated by the secondary winding (18, 36) of a differential transformer (10) by a differential fault appearing in primary windings (14, 16) of the differential transformer (10), the winding (26) of the polarized relay (20) being connected to said secondary winding (18, 36) by a full-wave rectifier (19, 34) with diodes (D1, D2) characterized in that said winding (26) of the polarized relay, having an inductance and a time constant allowing, when a pulsating fault current occurs, a successive accumulation of energy at each pulse for a tripping control for a predetermined threshold and a quasi-instantaneous tripping control, when a continuous fault having a higher value than the threshold, suddenly occurs.

2. Differential device according to claim 1, characterized in that relay inductance (20) is near 80 Henry for an alternating current of 50 Hertz and its resistance near 3 Kiloohms.

3. Differential device according to claim 1 or 2, characterized in that the winding (26) of the relay comprises 8000 turns.

4. Differential device according to claim 1, 2 or 3, characterized in that the time constant is higher than 15 milliseconds.

5. Differential device according to anyone of the previous claims, characterized in that secondary winding (18) has a mid point connected to one of the winding terminals (26) of the relay (20), the ends of the secondary winding (18) being respectively connected through a diode (D1, D2) to the other terminal of the winding (26) of the relay (20) to limit the number of diodes (D1, D2) inserted in the tripping circuit and the corresponding voltage drops.

6. Differential device according to any one of the previous claims, characterized in that the magnetic circuit (12) of the differential transformer (10) is made with a material, which hysteresis loop has a great difference between the saturation induction values and remanent values.

FIG 2

FIG. 1

FIG.4

FIG . 3